# EUROPÄISCHE PATENTANMELDUNG

(11) **EP 3 961 165 A2**
(43) Veröffentlichungstag der Anmeldung: **02.03.2022**
(21) Anmeldenummer: 21181125.2
(22) Anmeldetag: 23.06.2021
(51) Int. Cl.: G01J 3/02, G01J 3/10, G01J 3/42, G01N 21/85, A01B 79/00

(54) **LANDWIRTSCHAFTLICHE ARBEITSMASCHINE**

(30) Priorität: 24.08.2020 DE 102020122061
(71) Anmelder: CLAAS Selbstfahrende Erntemaschinen GmbH, 33428 Harsewinkel (DE)
(72) Erfinder: Nalbach, Marc, 33102 Paderborn (DE); Witte, Johann, 58730 Fröndenberg (DE); Fischer, Frédéric, 59759 Arnsberg (DE); Marbach, Ralf, 33775 Versmold (DE)
(74) Vertreter: CLAAS Gruppe

(57) **Zusammenfassung**

Die Erfindung betrifft eine landwirtschaftliche Arbeitsmaschine (1) mit mindestens einem Arbeitsaggregat (2) zur Verarbeitung von landwirtschaftlichem Gut (4), wobei das landwirtschaftliche Gut (4) in einem Gutstrom (5) entlang eines Guttransportweges (6) durch die landwirtschaftliche Arbeitsmaschine (1) transportiert wird, wobei die landwirtschaftliche Arbeitsmaschine (1) eine Kontrollanordnung (8) aufweist, die ein an dem Guttransportweg (6) angeordnetes optisches Messsystem (9) aufweist. Es wird vorgeschlagen, dass das optische Messsystem (9) ein Transflexions-Spektrometer (12) aufweist, dass das optische Messsystem (9) in einer Messroutine mittels des Transflexions-Spektrometers (12) optische Messdaten des Gutstroms (5) aufnimmt, während das landwirtschaftliche Gut (4) in dem Gutstrom (5) an dem Transflexions-Spektrometer (12) vorbei transportiert wird, dass das Transflexions-Spektrometer (12) eine Lichtquelle (13) und ein Lichtquellenfenster (14) aufweist, dass das Transflexions-Spektrometer (12) einen Lichtsensor (15) und ein Lichtsensorfenster (16) aufweist, dass die Lichtquelle (13) Licht aussendet, das im Betrieb von der Lichtquelle (13) durch das Lichtquellenfenster (14), anschließend entlang eines statistischen Transflexionspfades (17) durch den Gutstrom (5) und anschließend durch das Lichtsensorfenster (16) zu dem Lichtsensor (15) verläuft und dass das Lichtquellenfenster (14) und das Lichtsensorfenster (16) voneinander getrennt angeordnet sind.

## Beschreibung

Die Erfindung betrifft eine landwirtschaftliche Arbeitsmaschine gemäß dem Oberbegriff von Anspruch 1 sowie eine landwirtschaftliche Arbeitsmaschine gemäß Anspruch 16.

Es gibt eine Vielzahl landwirtschaftlicher Arbeitsmaschinen. Dies sind beispielsweise Zugmaschinen, wie Traktoren, Fahrzeuge zum Ausbringen von Gülle und dergleichen und insbesondere die vorliegend im Vordergrund stehenden landwirtschaftlichen Erntemaschinen wie Feldhäcksler und Mähdrescher.

Bei diesen landwirtschaftlichen Arbeitsmaschinen hat die Messung von Inhaltsstoffen von landwirtschaftlichen Gütern, insbesondere Agrarprodukten, große Bedeutung erlangt. Werden die Inhaltsstoffe der landwirtschaftlichen Güter direkt an der landwirtschaftlichen Arbeitsmaschine gemessen, kann während eines landwirtschaftlichen Arbeitsprozesses bereits auf Änderungen reagiert werden und die lange Wartezeit bei der Nutzung von stationären Laboren entfällt. Bei den landwirtschaftlichen Gütern kann es sich beispielsweise um Mais, Gras, Hülsenfrüchte und Ölfrüchtekörner handeln. Interessante Inhaltsstoffe sind dann beispielsweise ein Feuchtegehalt, Nährstoffe wie beispielsweise Proteine oder Zucker und dergleichen. Zum Messen der Inhaltsstoffe haben sich optische Messsysteme und insbesondere Spektroskope als vorteilhaft erwiesen.

Bei der Spektroskopie gibt es zwei grundsätzliche Messverfahren. Dies ist einerseits das Transmissionsverfahren und andererseits das Reflexionsverfahren. Bei der Reflexion wird ein landwirtschaftliches Gut durch ein Fenster hindurch mit Licht bestrahlt und das diffus von diesem landwirtschaftlichen Gut reflektierte Licht wird hinter demselben Fenster gemessen. Bei Transmissionsverfahren, die deutlich aufwändiger sind, wird ein Teil des landwirtschaftlichen Guts abgezweigt, komprimiert und mittels Licht durchstrahlt, um gegenüber der Lichtquelle transmittiertes Licht zu messen. Die so entstehenden Transmissionsspektren sind gegenüber Reflexionsspektren in der Auswertung und Aufnahme häufig vorteilhafter. Dieser Vorteil wird jedoch großteils durch den Nachteil aufgehoben, dass das landwirtschaftliche Gut abgezweigt und oft auch verdichtet werden muss. Weiterhin ist es komplex, repräsentative Stichproben aus einem landwirtschaftlichen Gut in einer landwirtschaftlichen Arbeitsmaschine abzuzweigen.

Die bekannte landwirtschaftliche Arbeitsmaschine (EP 3 208 602 A1), von der die Erfindung ausgeht, nutzt eine in einer landwirtschaftlichen Erntemaschine vorhandene Bypass-Kammer, um dort ein Transflexions-Verfahren anzuwenden. Bei der Transflexion handelt es sich um eine Mischung aus Reflexion und Transmission. Die Transflexion ist auch als Offset-Reflexion bekannt. Dabei werden die Lichtquelle und der Lichtsensor eines Spektroskops voneinander getrennt, wie bei der Transmission, sie werden jedoch so angeordnet, dass gerade kein relevanter Transmissionsanteil gemessen wird. Dies hat mehrere Vorteile. Zum einen müssen die Lichtquelle und der Lichtsensor nicht mehr gegenüber voneinander angeordnet werden und zum anderen wird das sogenannte "Pinhole-Problem" vermieden. Das Pinhole-Problem bezeichnet das Problem, dass die Transmissionsküvette zwischen Lichtquelle und Lichtsensor nicht immer vollständig gefüllt ist. Bereits ein einziger durchgehender Kanal, durch den Licht direkt von der Lichtquelle auf den Lichtsensor trifft, verfälscht eine Spektroskopmessung vollständig, sodass diese nicht verwertbar ist. Bei der Transflexion hingegen erreicht das Licht der Lichtquelle den Lichtsensor erst nach mehrfacher Reflexion. So entsteht ein Spektrum, das einem Transmissionsspektrum ähnelt und dessen Vorteile aufweist, das jedoch im Wesentlichen auf Basis von Reflexion in Kombination mit Transmission gebildet wird. Dabei ist die Möglichkeit, dass Licht direkt von der Lichtquelle auf den Lichtsensor fällt, entweder reduziert oder völlig ausgeschlossen.

Nachteilig bei der bekannten landwirtschaftlichen Arbeitsmaschine ist, dass noch immer eine feststehende Probe benötigt wird. Dafür muss das landwirtschaftliche Gut abgezweigt und gegebenenfalls verdichtet werden.

Der Erfindung liegt das Problem zugrunde, die bekannte landwirtschaftliche Arbeitsmaschine derart auszugestalten und weiterzubilden, dass die spektroskopische optische Messung von Inhaltsstoffen an landwirtschaftlichen Gütern besser und/oder weniger aufwändig möglich wird.

Das obige Problem wird bei einer landwirtschaftlichen Arbeitsmaschine gemäß dem Oberbegriff von Anspruch 1 durch die Merkmale des kennzeichnenden Teils von Anspruch 1 gelöst.

Wesentlich ist die grundsätzliche Überlegung, als optisches Messsystem bei einer landwirtschaftlichen Arbeitsmaschine ein Transflexions-Spektrometer vorzusehen, das an einem Guttransportweg der landwirtschaftlichen Arbeitsmaschine angeordnet ist und dort Messungen vornimmt, während das landwirtschaftliche Gut in einem Gutstrom an dem Transflexions-Spektrometer vorbeitransportiert wird. Durch die Erkenntnis, dass keine feststehende Probe benötigt wird, erhöhen sich die Einsatzmöglichkeiten des Transflexions-Spektrometers deutlich. Es wurde also erkannt, dass das Transflexions-Spektrometer wie ein Reflexions-Spektrometer verwendet werden kann, statt es wie ein Transmissions-Spektrometer zu verwenden.

Im Einzelnen wird vorgeschlagen, dass das optische Messsystem ein Transflexions-Spektrometer, insbesondere nahinfrarot-Transflexions-Spektrometer, aufweist, dass das optische Messsystem in einer Messroutine mittels des Transflexions-Spektrometers optische Messdaten des Gutstroms aufnimmt, während das landwirtschaftliche Gut in dem Gutstrom an dem Transflexions-Spektrometer vorbeitransportiert wird, dass das Transflexions-Spektrometer eine Lichtquelle und ein Lichtquellenfenster aufweist, dass das Transflexions-Spektrometer einen Lichtsensor und ein Lichtsensorfenster aufweist, dass die Lichtquelle Licht aussendet, das im Betrieb von der Lichtquelle durch das Lichtquellenfenster, anschließend entlang eines statistischen Transflexionspfades durch den Gutstrom und anschließend durch das Lichtsensorfenster zu dem Lichtsensor verläuft und dass das Lichtquellenfenster und das Lichtsensorfenster voneinander getrennt angeordnet sind.

Anspruch 2 betrifft bevorzugte Anwendungsgebiete des optischen Messsystems und Ausgestaltungen der landwirtschaftlichen Arbeitsmaschine. Interessant ist insbesondere die Nutzung bei partikulärem Erntegut, also Erntegut, das aus mehreren Partikeln besteht und anders als eine Flüssigkeit relativ inhomogen ist. Gerade bei partikulärem Erntegut ist beispielsweise das oben angesprochene Pinhole-Problem stark vorhanden.

Ein weiteres optisches Problem, das bei der Transflexion auftreten kann, ist die Verbreitung von Licht entlang einer Oberfläche der Fenster, hier dem Lichtquellenfenster und dem Lichtsensorfenster, oder die Übertragung von Licht mit nur ein- oder zweifacher Reflexion zwischen der Lichtquelle und dem Lichtsensor. Diese Probleme können ähnliche Effekte wie das Pinhole-Problem haben und Messungen verfälschen oder völlig vereiteln. Bei einer Ausgestaltung gemäß Anspruch 3 ist daher ein Lichtblocker vorgesehen, der derart in den statistischen Transflexionspfad ragt, dass dieser teilweise blockiert wird und die genannten Probleme reduziert oder vermieden werden.

Anspruch 4 betrifft bevorzugte Anordnungen des Lichtblockers. Dabei wird auch berücksichtigt, dass je nach Anordnung der Fenster Licht direkt durch die Fenster zwischen der Lichtquelle und dem Lichtsensor übertragen werden kann. Dies kann verhindert werden, indem der Lichtblocker auch zwischen den Fenstern angeordnet wird.

Bei einer Ausgestaltung gemäß Anspruch 5 sind die Fenster parallel und insbesondere in einer gemeinsamen Ebene angeordnet. In einer alternativen Ausgestaltung gemäß Anspruch 6 sind die Fenster winklig zueinander angeordnet. Durch die winklige Anordnung kann die mittlere Pfadlänge, die das Licht zwischen Lichtquelle und Lichtsensor zurücklegt, verkürzt werden. Besonders in Kombination mit dem Lichtblocker, durch den eine minimale Pfadlänge definiert werden kann, kann so die Signalqualität der Messung deutlich verbessert werden.

Anspruch 7 betrifft die Möglichkeit, die Fenster nebeneinander quer zu dem Guttransportweg anzuordnen und entsprechend quer zu dem Guttransportweg zu messen. Diese Messart kann bei diversen landwirtschaftlichen Gütern vorteilhaft sein. Weiterhin ist vorteilhaft, dass der Lichtblocker, sofern vorhanden, entsprechend auch quer zu dem Guttransportweg und somit dem Gutstrom angeordnet werden kann, wodurch dieser den Gutstrom weniger stört und die Messung nicht durch die Bildung von Löchern im Gutstrom verfälscht. Interessant ist dabei eine Kombination mit der Ausgestaltung gemäß Anspruch 8, wonach der Lichtblocker eine längliche Form entlang des Guttransportweges aufweisen kann. Auch ein Abflachen des Lichtblockers kann bezüglich der Strömungseigenschaften des Lichtblockers im Gutstrom vorteilhaft sein.

Die Ansprüche 9 bis 11 betreffen bevorzugte Größenordnungen und Abmessungen der unterschiedlichen Komponenten des Transflexions-Spektrometers.

Bevorzugte Materialien des Transflexions-Spektrometers sind Gegenstand von Anspruch 12.

In einer bevorzugten Ausgestaltung gemäß Anspruch 13 ist das Transflexions-Spektrometer an einem Auswurfkrümmer der landwirtschaftlichen Arbeitsmaschine angeordnet.

Die Ansprüche 14 und 15 betreffen die Möglichkeit, unterschiedliche Mischoptiken am Spektrometer vorzusehen. So können spektrale Fehler sowohl durch ungleiche Lichtstärkenverteilungen der Lichtquelle als auch unterschiedliche Lichtstärkenverteilungen auf Seiten des Lichtsensors vermieden werden.

Nach einer weiteren Lehre gemäß Anspruch 16, der eigenständige Bedeutung zukommt, wird eine landwirtschaftliche Arbeitsmaschine beansprucht. Bei dieser landwirtschaftlichen Arbeitsmaschine handelt es sich um eine landwirtschaftliche Arbeitsmaschine mit mindestens einer Ballenpresse als Arbeitsaggregat. Es wurde vorliegend erkannt, dass das Transflexions-Spektrometer nicht nur bei einem bewegten Gutstrom, sondern auch bei Ballen einer Ballenpresse zum Einsatz kommen kann. Diese weitere Lehre betrifft somit eine weitere, spezifische Anwendung des Transflexions-Spektrometers. Auf alle Ausführungen zu der vorschlagsgemäßen landwirtschaftlichen Arbeitsmaschine der ersten Lehre darf verwiesen werden.

Im Folgenden wird die Erfindung anhand einer lediglich Ausführungsbeispiele darstellenden Zeichnung näher erläutert. In der Zeichnung zeigt
- Fig. 1: eine vorschlagsgemäße landwirtschaftliche Arbeitsmaschine in Form eines Feldhäckslers,
- Fig. 2: den Auswurfkrümmer der vorschlagsgemäßen landwirtschaftlichen Arbeitsmaschine mit dem beispielhaft dort angeordneten optischen Messsystem und unterschiedlichen Ausgestaltungen des Lichtblockers,
- Fig. 3: das optische Messsystem am Auswurfkrümmer mit unterschiedlichen Mischoptiken und
- Fig. 4: eine winklige Anordnung der Fenster.

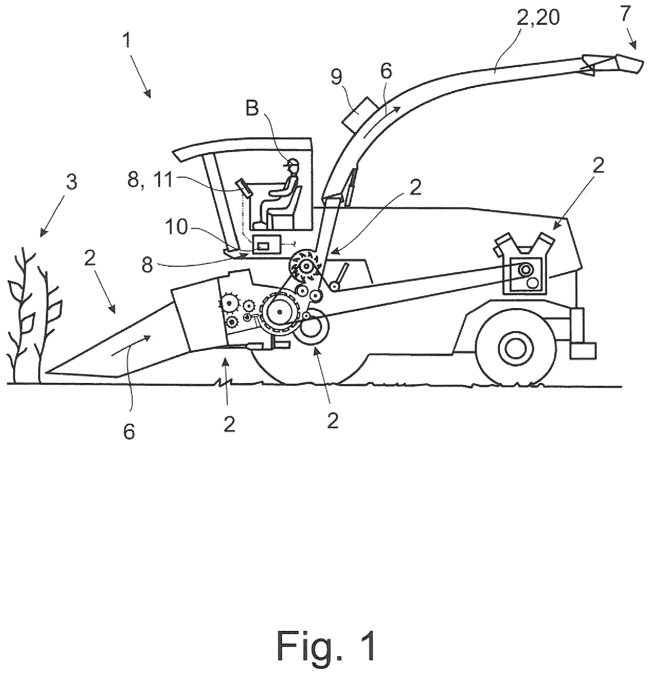

Die in Fig. 1 dargestellte landwirtschaftliche Arbeitsmaschine 1 kann jegliche Art von landwirtschaftlicher Arbeitsmaschine sein. Hier und vorzugsweise handelt es sich bei der landwirtschaftlichen Arbeitsmaschine 1 um eine Erntemaschine, insbesondere um einen in Fig. 1 dargestellten Feldhäcksler oder einen nicht dargestellten Mähdrescher. Die landwirtschaftliche Arbeitsmaschine 1 weist mindestens ein Arbeitsaggregat 2 auf. Sofern die landwirtschaftliche Arbeitsmaschine 1 eine Erntemaschine ist, dient diese zum Abernten und/oder Aufnehmen eines Feldbestands 3. Das Arbeitsaggregat 2 dient zur Verarbeitung von landwirtschaftlichem Gut 4, das insbesondere aus dem Feldbestand 3 gewonnen oder auf diesem verteilt wird.

Das landwirtschaftliche Gut 4 wird im Betrieb der landwirtschaftlichen Arbeitsmaschine 1 in einem Gutstrom 5 entlang eines Guttransportweges 6 durch die landwirtschaftliche Arbeitsmaschine 1 transportiert. Der Guttransportweg 6 kann bei einem Vorsatzgerät zur Aufnahme des Feldbestandes 3, wie in Fig. 1 gezeigt, beginnen, kann jedoch auch beispielsweise in einem Tank der landwirtschaftlichen Arbeitsmaschine 1 beginnen. Er kann in der landwirtschaftlichen Arbeitsmaschine 1 oder, wie hier, insbesondere an einem Auswurf 7 der landwirtschaftlichen Arbeitsmaschine 1 enden.

Zur Messung von Inhaltsstoffen des landwirtschaftlichen Guts 4 weist die landwirtschaftliche Arbeitsmaschine 1 eine Kontrollanordnung 8 auf, die ein an dem Guttransportweg 6 angeordnetes Messsystem 9 aufweist. Die Kontrollanordnung 8 weist vorzugsweise eine in der landwirtschaftlichen Arbeitsmaschine 1 angeordnete Steuerung 10, ein Benutzerterminal 11 zur Interaktion mit einem Benutzer B und dergleichen auf.

Wesentlich ist nun, dass das optische Messsystem 9 ein Transflexions-Spektrometer 12, insbesondere Nahinfrarot-Transflexions-Spektrometer, aufweist. Bezüglich der Definition von Transflexion darf auf den einleitenden Teil der Beschreibung verwiesen werden. Wesentlich ist dabei, dass es sich weder um eine reine Reflexions- noch um eine reine Transmissions-Messung handelt.

Wesentlich ist außerdem, dass das optische Messsystem 9 in einer Messroutine mittels des Transflexions-Spektrometers 12 optische Messdaten des Gutstroms 5 aufnimmt, während das landwirtschaftliche Gut 4 in dem Gutstrom 5 an dem Transflexions-Spektrometer 12 vorbeitransportiert wird. Grundsätzlich kann sich der Guttransportweg 6 einer landwirtschaftlichen Arbeitsmaschine 1 in einen Hauptguttransportweg und Nebenguttransportwege unterteilen. Nebenguttransportwege wären beispielsweise abzweigende Guttransportwege, die zu Analysezwecken vorgesehen sind. Hier und vorzugsweise ist das optische Messsystem 9 an dem Hauptguttransportweg angeordnet. So oder so ist jedoch wesentlich, dass sich das landwirtschaftliche Gut 4 während der Messung in Bewegung befindet. Das landwirtschaftliche Gut 4 wird also während der Messroutine nicht zum Zwecke der Messung oder zu einem anderen Zwecke angehalten.

Wesentlich ist weiterhin, dass das Transflexions-Spektrometer 12 eine Lichtquelle 13 und ein Lichtquellenfenster 14 aufweist, dass das Transflexions-Spektrometer 12 einen Lichtsensor 15 und ein Lichtsensorfenster 16 aufweist, dass die Lichtquelle 13 Licht aussendet, das im Betrieb von der Lichtquelle 13 durch das Lichtquellenfenster 14, anschließend entlang eines statistischen Transflexionspfades 17 durch den Gutstrom 5 und anschließend durch das Lichtsensorfenster 16 zu dem Lichtsensor 15 verläuft und dass das Lichtquellenfenster 14 und das Lichtsensorfenster 16 voneinander getrennt angeordnet sind.

Bei der Lichtquelle 13 kann es sich beispielsweise um eine Halogen-Lichtquelle oder eine LED-Lichtquelle handeln. Diese durchstrahlt direkt oder, wie noch erläutert wird, indirekt das Lichtquellenfenster 14. Von dort folgt dann das Licht zufälligen, jedoch statistisch verteilten, Pfaden durch das landwirtschaftliche Gut 4 in Form des Gutstroms 5.

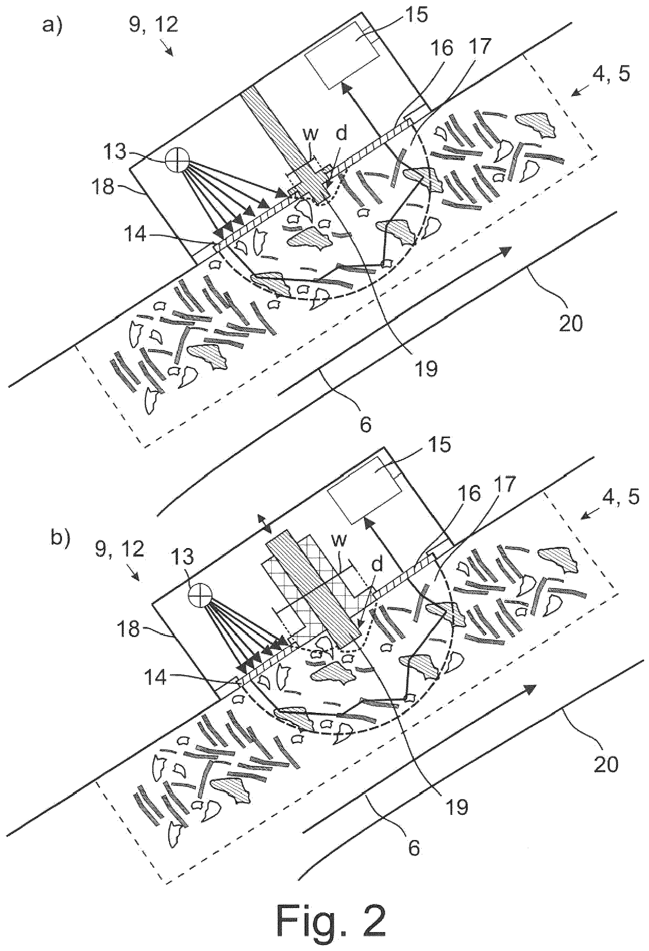

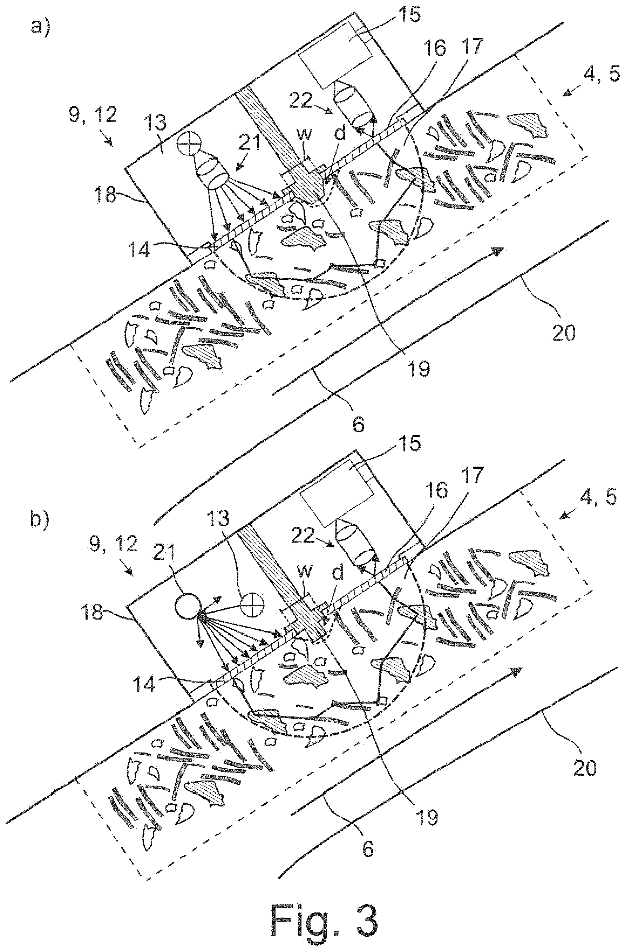

Der statistische Transflexionspfad 17 umfasst alle jenen Pfade, die das Licht mit einer noch relevanten Wahrscheinlichkeit durch den Gutstrom 5 nehmen kann. In den Figuren 2 und 3 ist dieser statistische Transflexionspfad gestrichelt angedeutet. Weiterhin ist beispielhaft in durchgezogener Linie der Weg eines einzelnen Lichtstrahls oder Lichtbündels rein beispielhaft eingezeichnet.

Bei der Transflexion werden das Lichtquellenfenster 14 und das Lichtsensorfenster 16 üblicherweise parallel und in einer gemeinsamen Ebene angeordnet. Vorliegend wird diese Definition ausdrücklich erweitert, sodass diese Parallelität nicht notwendig ist. Wesentlich ist lediglich, dass das Lichtquellenfenster 14 und das Lichtsensorfenster 16 voneinander getrennt angeordnet sind und kein wesentlicher Anteil des Lichts rein transmissiv übertragen wird. Eine neuartige Anwendung des Lichtquellenfensters 14 und des Lichtsensorfensters 16 in nicht-paralleler Art und Weise ist somit Teil einer besonders bevorzugten Ausgestaltung.

Der Begriff "Fenster" beim Lichtquellenfenster 14 und dem Lichtsensorfenster 16 ist weit auszulegen. Vorzugsweise weisen die Fenster 14, 16 jeweils einen Rahmen auf. Alternativ ist jedoch auch möglich, dass ein Gehäuse 18 des optischen Messsystems 9 oder des Transflexions-Spektrometers 12 vollständig oder teilweise transparent ausgestaltet wird. Es ist daher vorliegend so, dass nur derjenige lichtdurchlässige Teil zu dem jeweiligen Fenster 14, 16 zählt, durch den zwischen der Lichtquelle 13 und dem Lichtsensor 15 übertragenes Licht tatsächlich in relevantem Umfang durchtritt. Transparente Bauteile oder Abschnitte, die zu dieser Funktion nicht beitragen, sind nicht Teil des jeweiligen Fensters 14, 16.

Es ist hier und vorzugsweise so, dass das Transflexions-Spektrometer 12 und somit der Lichtsensor 15 nur eine spektrale Messung ohne Ortsauflösung aufnimmt. Es entsteht dann in örtlicher Dimension nur ein einziger Pixel, während diverse Pixel in Form von unterscheidbaren Wellenlängenbereichen eines Spektrums in spektraler Auflösung vorgesehen sind.

Wie bereits erwähnt ist die landwirtschaftliche Arbeitsmaschine 1 hier und vorzugsweise ein Feldhäcksler oder ein nicht dargestellter Mähdrescher. Die Analyse von Inhaltsstoffen ist besonders bei landwirtschaftlichen Ernteprozessen interessant, da landwirtschaftliche Erntemaschinen eine Vielzahl von verstellbaren Maschinenparametern aufweisen, mittels derer sich eine Qualität eines Ernteguts beeinflussen lässt. Diese Qualität wiederum wird teilweise über die Inhaltsstoffe abgebildet. Durch eine Analyse der Inhaltsstoffe an Bord der landwirtschaftlichen Erntemaschine wird somit eine Korrektur der Maschinenparameter direkt während des Ernteprozesses ermöglicht. Entsprechend kann das landwirtschaftliche Gut 4 hier und vorzugsweise ein Erntegut und der Gutstrom 5 ein Erntegutstrom sein. Vorzugsweise ist das Erntegut dabei ein partikuläres Erntegut und der Erntegutstrom ein partikulärer Erntegutstrom.

Bei dem vorschlagsgemäßen Transflexions-Spektrometer 12 kann über diverse Arten, je nach Anordnung der Fenster 14, 16 Streulicht von der Lichtquelle 13 zu dem Lichtsensor 15 gelangen. Eine dieser Möglichkeiten ist, dass der minimale Transflexionspfad durch nur ein- oder zweifache Reflexion gebildet wird und im Ergebnis sehr kurz ist. Da das Transflexions-Spektrometer 12 hier und vorzugsweise keine Ortsauflösung aufweist, können derart kurze Transflexionspfadlängen zu einem dem Pinhole-Problem ähnlichen Problem führen, bei dem das so übertragene Licht die restlichen Messungen überlagert. Eine weitere Möglichkeit, je nach Anordnung der Fenster 14, 16, ist, dass tatsächliche Pinholes entstehen. Um dies zu vermeiden, weist das Transflexions-Spektrometer 12 hier und vorzugsweise einen Lichtblocker 19 auf, der quer, insbesondere orthogonal, zu dem statistischen Transflexionspfad verläuft und der über eine vorbestimmte Tiefe d in den statistischen Transflexionspfad 17 hineinragt und so den statistischen Transflexionspfad 17 teilweise blockiert. Dieser Lichtblocker 19 ermöglicht es somit, einen Minimalwert für die Länge des statistischen Transflexionspfad 17 nach Bedarf festzulegen. Da es zumeist vorteilhaft ist, wenn die Längen der Transflexionspfade der Lichtbündel möglichst nah beieinander liegen, also wenig um den Mittelwert streuen, kann diese Streuung mittels des Lichtblockers 19 reduziert werden.

Es ist auch möglich, dass Streulicht direkt von dem Lichtquellenfenster 14 zu dem Lichtsensorfenster 16 und so zu dem Lichtsensor 15 übertragen wird. Grundsätzlich ist der Lichtblocker 19 hier und vorzugsweise zwischen dem Lichtquellenfenster 14 und dem Lichtsensorfenster 16 angeordnet. Um das genannte Problem zu vermeiden ist es vorzugsweise so, dass der Lichtblocker 19 zwischen dem Lichtquellenfenster 14 und dem Lichtsensorfenster 16 verläuft und das Lichtquellenfenster 14 und das Lichtsensorfenster 16 voneinander trennt, sodass kein Lichtpfad direkt von dem Lichtquellenfenster 14 zu dem Lichtsensorfenster 16 verlaufen kann. Dies ist in den Figuren 2 und 3 dargestellt. Wie ebenfalls in den Figuren 2 und 3 dargestellt, ist der Lichtblocker 19 hier und vorzugsweise an dem Gehäuse 18 befestigt. Andere Möglichkeiten sind jedoch ebenso denkbar. Der Lichtblocker 19 ist selbstverständlich lichtdicht. Hier und vorzugsweise reicht der Lichtblocker 19 nicht bis an einen mittleren Transflexionspfad 17 heran.

Im Folgenden werden nun zwei Alternativen beschrieben, wie die Fenster 14, 16 zueinander angeordnet sein können.

Bei der in den Figuren 2 und 3 gezeigten Alternative, die insofern eine bevorzugte Alternative bildet, sind das Lichtquellenfenster 14 und das Lichtsensorfenster 16 parallel zueinander, insbesondere in einer gemeinsamen Ebene, angeordnet. Diese und die folgenden Beschreibungen gehen davon aus, dass die Fenster 14, 16 beide im Wesentlichen eine plane Oberfläche aufweisen. Dies ist jedoch keinesfalls notwendig. Wenn also die Rede von der Anordnung der Fenster 14, 16 zueinander ist, bezieht sich diese Anordnung auf einen Teil, vorzugsweise jeweils auf einen relevanten Teil, der Oberfläche des jeweiligen Fensters 14, 16. Sofern notwendig kann diese Oberfläche durch eine mittlere Ebene approximiert werden. Wesentlich ist dabei die Pfadlänge und ggf. ein Winkel, den ein wesentlicher Teil des Lichts außerhalb der Fenster 14, 16 zurücklegt, nicht die konkrete Topographie der Oberfläche des jeweiligen Fensters 14, 16. Dabei interessiert bei dem Lichtquellenfenster 14 nur dasjenige Licht, das entlang des statistischen Transflexionspfades 17 in relevanter Häufigkeit das Lichtsensorfenster 16 und den Lichtsensor 15 erreicht. Bei der parallelen Anordnung ist es entsprechend so, dass ein wesentlicher Teil des Lichts über den statistischen Transflexionspfad 17 einen Winkel von 180° zurücklegt.

Es ist theoretisch auch denkbar, dass das Lichtquellenfenster 14 und das Lichtsensorfenster 16 gegenüber voneinander angeordnet sind. In diesem Fall ist jedoch wie oben bereits betont essentiell, dass trotzdem im Wesentlichen keine reine Transmission des Lichts erfolgt. Denkbar wäre jedoch, den Lichtblocker 19 zwischen gegenüberliegenden Fenstern 14, 16 anzuordnen, um die Transmission zu blockieren.

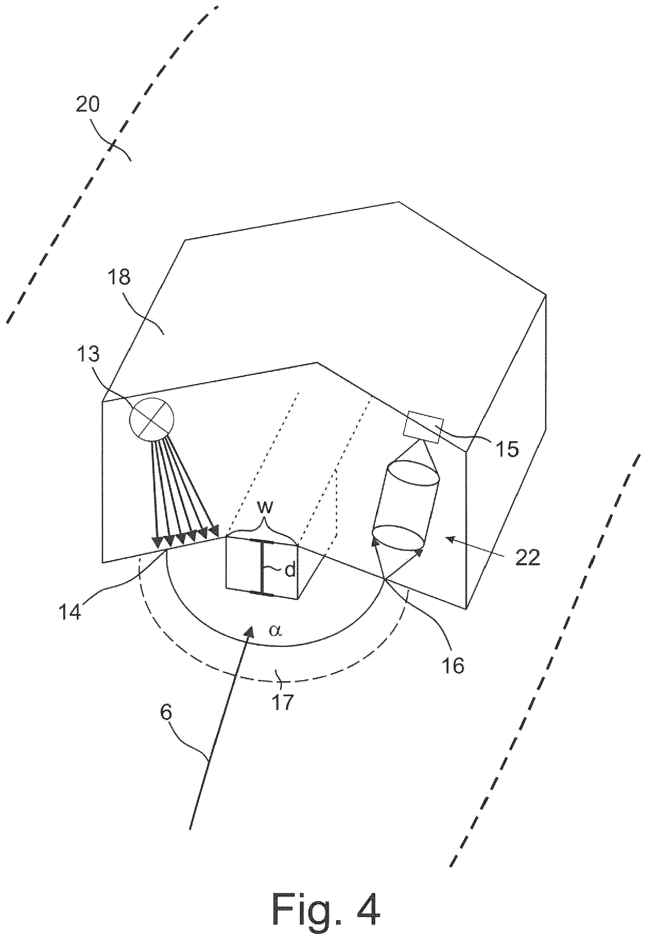

In der zweiten und insoweit ebenfalls bevorzugten Alternative, die in Fig. 4 dargestellt ist, sind das Lichtquellenfenster 14 und das Lichtsensorfenster 16 winklig zueinander angeordnet, wobei unter winklig eine nicht-parallele Anordnung zu verstehen ist. Vorzugsweise beträgt der Winkel α zwischen dem Lichtquellenfenster 14 und dem Lichtsensorfenster 16 weniger als 180°, vorzugsweise weniger als 170°, weiter vorzugsweise weniger als 150°, noch weiter vorzugsweise weniger als 130°. Zusätzlich oder alternativ kann der Winkel α zwischen dem Lichtquellenfenster 14 und dem Lichtsensorfenster 16 mehr als 45°, vorzugsweise mehr als 90°, weiter vorzugsweise mehr als 100°, noch weiter vorzugsweise mehr als 120°, betragen. Ein Vorteil einer derartigen Anordnung ist, dass der Mittelwert der Länge des statistischen Transflexionspfades 17 reduziert werden kann. Auch die Streuung um den Mittelwert kann so reduziert werden. Dabei ist die Anordnung der Fenster 14, 16 zueinander vorzugsweise so gewählt, dass unter Berücksichtigung gegebenenfalls vorhandener Optiken und des Lichtblockers 19 kein direkter Pfad von der Lichtquelle 13 zu dem Lichtsensor 15 entsteht. Je kleiner der Winkel α ist, desto größer wird potentiell die Bedeutung eines Lichtblockers 19 und dessen Ausgestaltung.

Wie in Fig. 4 dargestellt und insoweit eine bevorzugte Ausführungsform bildend, können das Lichtquellenfenster 14 und das Lichtsensorfenster 16 quer, insbesondere orthogonal, zu dem Guttransportweg 6 nebeneinander angeordnet sein. Zusätzlich oder alternativ sind das Lichtquellenfenster 14 und das Lichtsensorfenster 16 voneinander beabstandet. Dieser Abstand w verläuft insbesondere quer zum Guttransportweg 6. Entsprechend verläuft hier und vorzugsweise auch der statistische Transflexionspfad 17 quer, insbesondere orthogonal, zu dem Guttransportweg 6.

Vorzugsweise beträgt der Abstand w zwischen dem Lichtquellenfenster 14 und dem Lichtsensorfenster 16 mindestens 1 Millimeter, vorzugsweise mindestens 3 Millimeter, weiter vorzugsweise mindestens 5 Millimeter und/oder höchstens 60 Millimeter, vorzugsweise höchstens 45 Millimeter, weiter vorzugsweise höchstens 30 Millimeter.

Wie in Fig. 3 dargestellt, kann der Lichtblocker 19 eine längliche Form orthogonal zum Guttransportweg 6 aufweisen. Alternativ kann der Lichtblocker 19 eine längliche Form entlang des Guttransportwegs 6 aufweisen. Weiterhin kann vorgesehen sein, dass der Lichtblocker 19, wie in Fig. 3a) dargestellt, abgeflachte Kanten und/oder abgeflachte Ecken aufweist. Insbesondere können die Kanten in Richtung des Lichtquellenfensters 14 und/oder des Lichtsensorfensters 16 abgeflacht sein. Es kann also vorgesehen sein, dass der Lichtblocker 19 ausgehend von dem jeweiligen Fenster 14, 16 seine vorbestimmte Tiefe d erst graduell erreicht. Der Lichtblocker 19 kann im Querschnitt, insbesondere orthogonal zum Guttransportweg 6, eine trapezförmige Grundform aufweisen. Diese Möglichkeiten tragen dem Umstand Rechnung, dass die minimale Pfadlänge des statistischen Transflexionspfads 17 durch die Außenkontur des Lichtblockers 19 definiert werden kann und, dass scharfe Kanten je nach landwirtschaftlichem Gut 4 weniger optimal sind.

Die vordefinierte Tiefe d beträgt vorzugsweise mindestens 3 Millimeter, vorzugsweise mindestens 10 Millimeter, weiter vorzugsweise mindestens 20 Millimeter und/oder vorzugsweise höchstens 50 Millimeter, vorzugsweise höchstens 40 Millimeter, weiter vorzugsweise höchstens 30 Millimeter. Insbesondere kann die vordefinierte Tiefe d 25 Millimeter betragen.

Gemäß einer in Fig. 2b) dargestellten Ausführungsform kann vorgesehen sein, dass die Kontrollanordnung 8 den Lichtblocker 19 verstellen kann, um die vordefinierte Tiefe d zu ändern. Dieses Verstellen kann insbesondere ein Ein- und Ausfahren des Lichtblockers 19 sein. Es kann motorbasiert, pneumatisch oder anderweitig erfolgen.

Es kann dann vorgesehen sein, dass die Kontrollanordnung 8, vorzugsweise in Abhängigkeit eines gerade verarbeiteten landwirtschaftlichen Guts 4 eine vordefinierte Tiefe d auswählt oder sukzessive mehrere vordefinierte Tiefen d einstellt und eine optimale vordefinierte Tiefe d ermittelt und dann einstellt. So kann die vordefinierte Tiefe d an das landwirtschaftliche Gut 4 und dessen Eigenschaften angepasst werden.

Es ist hier und vorzugsweise so, dass das Lichtquellenfenster 14 und/oder das Lichtsensorfenster 16 länglich, insbesondere rechteckig, entlang des Guttransportweges 6 ausgestaltet ist. Vorzugsweise ist das Lichtquellenfenster 14 und/oder das Lichtsensorfenster 16 entlang des Guttransportweges 6 drei- bis zehnmal länger als orthogonal zum Guttransportweg 6 breit. Sowohl die Form als auch die Größe beziehen sich hier wieder auf die effektive, lichtdurchstrahlte Größe, wie oben bereits definiert.

Es kann vorgesehen sein, dass das Lichtquellenfenster 14 und/oder das Lichtsensorfenster 16 entlang des Guttransportweges 6 mindestens 5 Millimeter, vorzugsweise mindestens 10 Millimeter, weiter vorzugsweise mindestens 15 Millimeter, noch weiter vorzugsweise mindestens 20 Millimeter, lang ist, und/oder, dass das Lichtquellenfenster 14 und/oder das Lichtsensorfenster 16 entlang des Guttransportweges 6 höchstens 150 Millimeter, vorzugsweise höchstens 120 Millimeter, weiter vorzugsweise höchstens 100 Millimeter, noch weiter vorzugsweise höchstens 80 Millimeter, lang ist. Es kann zusätzlich oder alternativ vorgesehen sein, dass das Lichtquellenfenster 14 und/oder das Lichtsensorfenster 16 quer zum Guttransportweg 6 mindestens einen Millimeter, vorzugsweise mindestens drei Millimeter, weiter vorzugsweise mindestens 5 Millimeter, breit ist, und/oder, dass das Lichtquellenfenster 14 und/oder das Lichtsensorfenster 16 quer zum Guttransportweg 6 höchstens 50 Millimeter, vorzugsweise höchstens 25 Millimeter, weiter vorzugsweise höchstens 15 Millimeter, noch weiter vorzugsweise höchstens zehn Millimeter, breit ist.

Materialtechnisch können das Lichtquellenfenster 14 und/oder das Lichtsensorfenster 16, insbesondere vollständig, aus Saphir bestehen.

Vorzugsweise weist der Lichtsensor 15, vorzugsweise im Wesentlichen nur, optische Sensorelemente auf Siliziumbasis auf. Sensorelemente auf Siliziumbasis sind dabei günstiger als beispielsweise Sensorelemente auf Indium-Gallium-Arsenid-Basis, jedoch hinsichtlich des aufnehmbaren Wellenlängenbereichs beschränkter. Vorliegend ist aufgrund der Nähe des Transflexions-Spektrums zum Transmissions-Spektrum eine Nutzung von Silizium-Sensorelementen möglich. Das Transflexions-Spektrometer 12 nimmt vorzugsweise die optischen Messdaten im Wellenlängenbereichs des Lichts umfassend 700 nm und/oder 800 nm und/oder 900 nm und/oder 970 nm und/oder 1000 nm und/oder 1100 nm auf. Vorzugsweise nimmt das Transflexions-Spektrometer 12 die optischen Messdaten im Wellenlängenbereich des Lichts umfassend mindestens 850 nm bis 1050 nm auf.

Wie in Fig. 1 dargestellt, ist das Transflexions-Spektrometer 12 hier und vorzugsweise an einem Auswurfkrümmer 20 der landwirtschaftlichen Arbeitsmaschine 1 angeordnet und nimmt die optischen Messdaten des Gutstroms 5 im Auswurfkrümmer 20 auf. Wie in Fig. 4 dargestellt, kann vorgesehen sein, dass das Lichtquellenfenster 14 und/oder das Lichtsensorfenster 16 gegenüber einer Oberfläche des Auswurfkrümmers 20 oder generell einer Oberfläche der landwirtschaftlichen Arbeitsmaschine 1 bezogen auf den Guttransportweg 6, zurückversetzt ist. Dabei kann insbesondere vorgesehen sein, dass keine Komponente des Transflexions-Spektrometers 12 oder nur der Lichtblocker 19 oder zumindest nicht das Lichtquellenfenster 14 und/oder das Lichtsensorfenster 16 gegenüber der Oberfläche in Richtung des Guttransportweges 6 hervorragt. Besonders bevorzugt sind die Fenster 14, 16 gegenüber der Oberfläche zurückversetzt und der Lichtblocker 19 im Wesentlichen bündig zu der Oberfläche. Es wird so eine Möglichkeit geschaffen, die Fenster 14, 16 winklig zueinander anzuordnen, ohne dass das Transflexions-Spektrometer 12 in den Guttransportweg 6 oder den Gutstrom 5 hineinragt.

Zur Vermeidung spektraler Fehler kann, wie in den Figuren 2 bis 4 gezeigt, vorgesehen sein, dass das Transflexions-Spektrometer 12 eine Lichtquellen-Mischoptik 21 aufweist. Unter einer Mischoptik wird eine Optik verstanden, die Licht räumlich homogenisiert. Entsprechend ist vorgesehen, dass das Licht von der Lichtquelle 13 zu der Lichtquellen-Mischoptik 21 verläuft, dass die Lichtquellen-Mischoptik 21 das Licht mischt und räumlich homogenisiert, dass das homogenisierte Licht von der Lichtquellen-Mischoptik 21 durch das Lichtquellenfenster 14 verläuft und so vorzugsweise nur homogenisiertes Licht durch das Lichtquellen-Fenster 14 verläuft. Stellen, an denen die Lichtquelle 13 stärker oder schwächer Licht abstrahlt, können so nachträglich korrigiert werden. Das Licht verläuft allgemein durch die Mischoptik oder wird von dieser reflektiert.

Zusätzlich oder alternativ kann das Transflexions-Spektrometer 12 eine Lichtsensor-Mischoptik 22 aufweisen, wobei das Licht von dem Lichtsensorfenster 16 zu der Lichtsensor-Mischoptik 22 verläuft, die Lichtsensor-Mischoptik 22 das Licht mischt und räumlich homogenisiert und das homogenisierte Licht von der Lichtsensor-Mischoptik 22 zu dem Lichtsensor 15 verläuft. Da durch unterschiedliches Reflexionsverhalten des landwirtschaftlichen Guts 4 das Licht nicht räumlich homogen auf das Lichtsensorfenster 16 trifft, kann das Licht so nachträglich homogenisiert werden, um von dem Lichtsensor 15 gleichmäßig bei allen Spektralbereichen gemessen zu werden.

Die Lichtquellen-Mischoptik 21 und/oder die Lichtsensor-Mischoptik 22 kann eine Köhler-Optik und/oder einen Compound-Parabolic-Concentrator und/oder ein integrierendes Element, insbesondere eine integrierende Kugel, und/oder Mixerstäbe und/oder Streuscheiben aufweisen. Ein integrierendes Element ist ein Element, das diffus weiß ausgestaltet ist und das Licht diffus reflektiert. Ein derartiges integrierendes Element ist vorzugsweise bei der Lichtquellen-Mischoptik 21 vorgesehen.

Gemäß einer weiteren Lehre, der eigenständige Bedeutung zukommt, wird eine landwirtschaftliche Arbeitsmaschine 1 mit mindestens einem Arbeitsaggregat 2 zur Verarbeitung von landwirtschaftlichem Gut 4 vorgeschlagen. Die landwirtschaftliche Arbeitsmaschine 1 dieser weiteren Lehre weist mindestens eine Ballenpresse als Arbeitsaggregat 2 auf. Das landwirtschaftliche Gut 4 wird im Betrieb der landwirtschaftlichen Arbeitsmaschine 1 in einem Gutstrom 5 entlang eines Guttransportweges 6 durch die landwirtschaftliche Arbeitsmaschine 1 und dabei durch die Ballenpresse transportiert. Das landwirtschaftliche Gut 4 wird in der Ballenpresse 4 zu Ballen gepresst. Die landwirtschaftliche Arbeitsmaschine 1 weist eine Kontrollanordnung 8 auf, die ein an dem Guttransportweg 6 angeordnetes optisches Messsystem 9 aufweist, wobei das optische Messsystem 9 ein Transflexions-Spektrometer 12, insbesondere Nah-Infrarot-Transflexions-Spektrometer, aufweist. In einer Messroutine nimmt das optische Messsystem 9 mittels des Transflexions-Spektrometers 12 optische Messdaten eines Ballens auf.

Das Transflexions-Spektrometer 12 weist eine Lichtquelle 13 und ein Lichtquellenfenster 14 auf. Das Transflexions-Spektrometer 12 weist weiterhin einen Lichtsensor 15 und ein Lichtsensorfenster 16 auf. Im Betrieb sendet die Lichtquelle 13 Licht aus, das von der Lichtquelle 13 im Betrieb durch das Lichtquellenfenster 14, anschließend entlang eines statistischen Transflexionspfades 17 durch den Ballen und anschließend durch das Lichtsensorfenster 16 zu dem Lichtsensor 15 verläuft. Das Lichtquellenfenster 14 und das Lichtsensorfenster 16 sind voneinander getrennt angeordnet.

Bei dieser weiteren Lehre ist nicht essentiell, dass das landwirtschaftliche Gut 4, das zu Ballen gepresst wird, bei der Messung in Bewegung ist. Insofern betrifft diese weitere Lehre eine weitere Anwendungsmöglichkeit des Transflexions-Spektrometers 12. Auf alle Ausführungen zu der ersten Lehre, sofern anwendbar, darf verwiesen werden. Insbesondere darf auf die Ausführungen zu dem optischen Messsystem 9 der ersten Lehre verwiesen werden.

### Bezugszeichenliste

- 1: Landwirtschaftliche Arbeitsmaschine
- 2: Arbeitsaggregat
- 3: Feldbestand
- 4: Landwirtschaftliches Gut
- 5: Gutstrom
- 6: Guttransportweg
- 7: Auswurf
- 8: Kontrollanordnung
- 9: Optisches Messsystem
- 10: Steuerung
- 11: Terminal
- 12: Transflexions-Spektrometer
- 13: Lichtquelle
- 14: Lichtquellenfenster
- 15: Lichtsensor
- 16: Lichtsensorfenster
- 17: Statistischer Transflexionspfad
- 18: Gehäuse
- 19: Lichtblocker
- 20: Auswurfkrümmer
- 21: Lichtquellen-Mischoptik
- 22: Lichtsensor-Mischoptik
- B: Benutzer
- d: Tiefe
- w: Abstand

## Patentansprüche

1. Landwirtschaftliche Arbeitsmaschine (1), insbesondere Erntemaschine, mit mindestens einem Arbeitsaggregat (2) zur Verarbeitung von landwirtschaftlichem Gut (4), wobei das landwirtschaftliche Gut (4) im Betrieb der landwirtschaftlichen Arbeitsmaschine (1) in einem Gutstrom (5) entlang eines Guttransportweges (6) durch die landwirtschaftliche Arbeitsmaschine (1) transportiert wird,
wobei die landwirtschaftliche Arbeitsmaschine (1) eine Kontrollanordnung (8) aufweist, die ein an dem Guttransportweg (6) angeordnetes optisches Messsystem (9) aufweist,
**dadurch gekennzeichnet,**
**dass** das optische Messsystem (9) ein Transflexions-Spektrometer (12), insbesondere nahinfrarot-Transflexions-Spektrometer, aufweist, dass das optische Messsystem (9) in einer Messroutine mittels des Transflexions-Spektrometers (12) optische Messdaten des Gutstroms (5) aufnimmt, während das landwirtschaftliche Gut (4) in dem Gutstrom (5) an dem Transflexions-Spektrometer (12) vorbei transportiert wird,
**dass** das Transflexions-Spektrometer (12) eine Lichtquelle (13) und ein Lichtquellenfenster (14) aufweist, dass das Transflexions-Spektrometer (12) einen Lichtsensor (15) und ein Lichtsensorfenster (16) aufweist, dass die Lichtquelle (13) Licht aussendet, das im Betrieb von der Lichtquelle (13) durch das Lichtquellenfenster (14), anschließend entlang eines statistischen Transflexionspfades (17) durch den Gutstrom (5) und anschließend durch das Lichtsensorfenster (16) zu dem Lichtsensor (15) verläuft und dass das Lichtquellenfenster (14) und das Lichtsensorfenster (16) voneinander getrennt angeordnet sind.

2. Landwirtschaftliche Arbeitsmaschine nach Anspruch 1, **dadurch gekennzeichnet, dass** die landwirtschaftliche Arbeitsmaschine (1) ein Mähdrescher oder ein Feldhäcksler ist, und/oder, dass das landwirtschaftliche Gut (4) ein Erntegut und der Gutstrom (5) ein Erntegutstrom ist, vorzugsweise, dass das Erntegut ein partikuläres Erntegut und der Erntegutstrom ein partikulärer Erntegutstrom ist.

3. Landwirtschaftliche Arbeitsmaschine nach Anspruch 1 oder 2, **dadurch gekennzeichnet, dass** das Transflexions-Spektrometer (12) einen Lichtblocker (19) aufweist, der quer, insbesondere orthogonal, zu dem statistischen Transflexionspfad (17) verläuft und der über eine vorbestimmte Tiefe (d) in den statistischen Transflexionspfad (17) hineinragt und so den statistischen Transflexionspfad (17) teilweise blockiert.

4. Landwirtschaftliche Arbeitsmaschine nach Anspruch 3, **dadurch gekennzeichnet, dass** der Lichtblocker (19) zwischen dem Lichtquellenfenster (14) und dem Lichtsensorfenster (16) angeordnet ist, vorzugsweise, dass der Lichtblocker (19) zwischen dem Lichtquellenfenster (14) und dem Lichtsensorfenster (16) verläuft und das Lichtquellenfenster (14) und das Lichtsensorfenster (16) voneinander trennt, sodass kein Lichtpfad direkt von dem Lichtquellenfenster (14) zu dem Lichtsensorfenster (16) verlaufen kann.

5. Landwirtschaftliche Arbeitsmaschine nach einem der vorhergehenden Ansprüche, **dadurch gekennzeichnet, dass** das Lichtquellenfenster (14) und das Lichtsensorfenster (16) parallel zueinander, insbesondere in einer gemeinsamen Ebene, angeordnet sind, vorzugsweise dass der Lichtblocker (19) von dieser gemeinsamen Ebene aus über die vorbestimmte Tiefe (d) in den statistischen Transflexionspfad ragt und vorzugsweise durch die gemeinsame Ebene verläuft und so das Lichtquellenfenster (14) und das Lichtsensorfenster (16) voneinander trennt.

6. Landwirtschaftliche Arbeitsmaschine nach einem der Ansprüche 1 bis 4, **dadurch gekennzeichnet, dass** das Lichtquellenfenster (14) und das Lichtsensorfenster (16) winklig zueinander angeordnet sind, vorzugsweise, dass ein Winkel (a) zwischen dem Lichtquellenfenster (14) und dem Lichtsensorfenster (16) weniger als 180°, vorzugsweise weniger als 170°, weiter vorzugsweise weniger als 150°, noch weiter vorzugsweise weniger als 130°, beträgt, und/oder, dass ein Winkel (a) zwischen dem Lichtquellenfenster (14) und dem Lichtsensorfenster (16) mehr als 45°, vorzugsweise mehr als 90°, weiter vorzugsweise mehr als 100°, noch weiter vorzugsweise mehr als 120°, beträgt.

7. Landwirtschaftliche Arbeitsmaschine nach einem der vorhergehenden Ansprüche, **dadurch gekennzeichnet, dass** das Lichtquellenfenster (14) und das Lichtsensorfenster (16) quer, insbesondere orthogonal, zu dem Guttransportweg (6) nebeneinander angeordnet sind, und/oder, dass das Lichtquellenfenster (14) und das Lichtsensorfenster (16), insbesondere quer zum Guttransportweg (6), voneinander beabstandet sind, weiter vorzugsweise, dass der Abstand (w) zwischen dem Lichtquellenfenster (14) und dem Lichtsensorfenster (16) mindestens einen mm, vorzugsweise mindestens drei mm, weiter vorzugsweise mindestens fünf mm und/oder höchstens 60 mm, vorzugsweise höchstens 45 mm, weiter vorzugsweise höchstens 30 mm, beträgt.

8. Landwirtschaftliche Arbeitsmaschine nach einem der Ansprüche 3 bis 7, **dadurch gekennzeichnet, dass** der Lichtblocker (19) eine längliche Form orthogonal zum Guttransportweg (6) oder entlang des Guttransportweges (6) aufweist, und/oder, dass der Lichtblocker (19) abgeflachte, insbesondere in Richtung des Lichtquellenfensters (14) und/oder des Lichtsensorfensters (16) abgeflachte, Kanten und/oder abgeflachte Ecken aufweist, vorzugsweise, dass der Lichtblocker (19) im Querschnitt, insbesondere orthogonal zum Guttransportweg (6), eine trapezförmige Grundform aufweist.

9. Landwirtschaftliche Arbeitsmaschine nach einem der Ansprüche 3 bis 8, **dadurch gekennzeichnet, dass** die vordefinierte Tiefe (d) mindestens 3 mm, vorzugsweise mindestens 10 mm, weiter vorzugsweise mindestens 20 mm, beträgt, und/oder, dass die vordefinierte Tiefe (d) höchstens 50 mm, vorzugsweise höchstens 40 mm, weiter vorzugsweise höchstens 30 mm, beträgt, und/oder, dass die vordefinierte Tiefe (d) 25 mm beträgt, und/oder, dass die Kontrollanordnung (8) den Lichtblocker (19) verstellen, insbesondere ein- und ausfahren, kann, um die vordefinierte Tiefe (d) zu ändern.

10. Landwirtschaftliche Arbeitsmaschine nach einem der vorhergehenden Ansprüche, **dadurch gekennzeichnet, dass** das Lichtquellenfenster (14) und/oder das Lichtsensorfenster (16) länglich, insbesondere rechteckig, entlang des Guttransportweges (6) ausgestaltet ist, vorzugsweise, dass das Lichtquellenfenster (14) und/oder das Lichtsensorfenster (16) entlang des Guttransportweges (6) drei- bis zehnmal länger als orthogonal zum Guttransportweg (6) breit ist.

11. Landwirtschaftliche Arbeitsmaschine nach einem der vorhergehenden Ansprüche, **dadurch gekennzeichnet, dass** das Lichtquellenfenster (14) und/oder das Lichtsensorfenster (16) entlang des Guttransportweges (6) mindestens 5 mm, vorzugsweise mindestens 10 mm, weiter vorzugsweise mindestens 15 mm, noch weiter vorzugsweise mindestens 20 mm, lang ist, und/oder, dass das Lichtquellenfenster (14) und/oder das Lichtsensorfenster (16) entlang des Guttransportweges (6) höchstens 150 mm, vorzugsweise höchstens 120 mm, weiter vorzugsweise höchstens 100 mm, noch weiter vorzugsweise höchstens 80 mm, lang ist, und/oder, dass das Lichtquellenfenster (14) und/oder das Lichtsensorfenster (16) quer zum Guttransportweg (6) mindestens 1 mm, vorzugsweise mindestens 3 mm, weiter vorzugsweise mindestens 5 mm, breit ist, und/oder, dass das Lichtquellenfenster (14) und/oder das Lichtsensorfenster (16) quer zum Guttransportweg (6) höchstens 50 mm, vorzugsweise höchstens 25 mm, weiter vorzugsweise höchstens 15 mm, noch weiter vorzugsweise höchstens zehn mm, breit ist.

12. Landwirtschaftliche Arbeitsmaschine nach einem der vorhergehenden Ansprüche, **dadurch gekennzeichnet, dass** das Lichtquellenfenster (14) und/oder das Lichtsensorfenster (16), insbesondere vollständig, aus Saphir besteht, und/oder, dass der Lichtsensor (15), vorzugsweise im Wesentlichen nur, optische Sensorelemente auf Siliziumbasis aufweist, und/oder, dass das Transflexions-Spektrometer (12) die optischen Messdaten im Wellenlängenbereich des Lichts umfassend 700 nm und/oder 800 nm und/oder 900 nm und/oder 970 nm und/oder 1000 nm und/oder 1100 nm aufnimmt.

13. Landwirtschaftliche Arbeitsmaschine nach einem der vorhergehenden Ansprüche, **dadurch gekennzeichnet, dass** das Transflexions-Spektrometer (12) an einem Auswurfkrümmer (20) der landwirtschaftlichen Arbeitsmaschine (1) angeordnet ist und die optischen Messdaten des Gutstroms (5) im Auswurfkrümmer (20) aufnimmt.

14. Landwirtschaftliche Arbeitsmaschine nach einem der vorhergehenden Ansprüche, **dadurch gekennzeichnet, dass** das Transflexions-Spektrometer (12) eine Lichtquellen-Mischoptik (21) aufweist, dass das Licht von der Lichtquelle (13) zu der Lichtquellen-Mischoptik (21) verläuft, dass die Lichtquellen-Mischoptik (21) das Licht mischt und räumlich homogenisiert, dass das homogenisierte Licht von der Lichtquellen-Mischoptik (21) durch das Lichtquellenfenster (14) verläuft, und/oder, dass das Transflexions-Spektrometer (12) eine Lichtsensor-Mischoptik (22) aufweist, dass das Licht von dem Lichtsensorfenster (16) zu der Lichtsensor-Mischoptik (22) verläuft, dass die Lichtsensor-Mischoptik (22) das Licht mischt und räumlich homogenisiert, dass das homogenisierte Licht von der Lichtsensor-Mischoptik (22) zu dem Lichtsensor (15) verläuft.

15. Landwirtschaftliche Arbeitsmaschine nach Anspruch 14, **dadurch gekennzeichnet, dass** die Lichtquellen-Mischoptik (21) und/oder die Lichtsensor-Mischoptik (22) eine Köhler-Optik und/oder einen Compound-Parabolic-Concentrator und/oder ein integrierendes Element, insbesondere eine integrierende Kugel, und/oder Mixerstäbe und/oder Streuscheiben aufweist.

16. Landwirtschaftliche Arbeitsmaschine mit mindestens einem Arbeitsaggregat (2) zur Verarbeitung von landwirtschaftlichem Gut (4), mit mindestens einer Ballenpresse als Arbeitsaggregat (2),
wobei das landwirtschaftliche Gut (4) im Betrieb der landwirtschaftlichen Arbeitsmaschine (1) in einem Gutstrom (5) entlang eines Guttransportweges (6) durch die landwirtschaftliche Arbeitsmaschine (1) und dabei durch die Ballenpresse transportiert wird, wobei das landwirtschaftliche Gut (4) in der Ballenpresse zu Ballen gepresst wird,
wobei die landwirtschaftliche Arbeitsmaschine (1) eine Kontrollanordnung (8) aufweist, die ein an dem Guttransportweg (6) angeordnetes optisches Messsystem (9) aufweist,
wobei das optische Messsystem (9) ein Transflexions-Spektrometer (12), insbesondere nahinfrarot-Transflexions-Spektrometer, aufweist, wobei das optische Messsystem (9) in einer Messroutine mittels des Transflexions-Spektrometers (12) optische Messdaten eines Ballens aufnimmt,
wobei das Transflexions-Spektrometer (12) eine Lichtquelle (13) und ein Lichtquellenfenster (14) aufweist, dass das Transflexions-Spektrometer (12) einen Lichtsensor (15) und ein Lichtsensorfenster (16) aufweist, wobei die Lichtquelle (13) Licht aussendet,
das im Betrieb von der Lichtquelle (13) durch das Lichtquellenfenster (14), anschließend entlang eines statistischen Transflexionspfades (17) durch den Ballen und anschließend durch das Lichtsensorfenster (16) zu dem Lichtsensor (15) verläuft und wobei das Lichtquellenfenster (14) und das Lichtsensorfenster (16) voneinander getrennt angeordnet sind.
